# EUROPÄISCHE PATENTSCHRIFT

(11) **EP 2 188 951 B1**
(45) Veröffentlichungstag und Bekanntmachung des Hinweises auf die Patenterteilung: **26.04.2017**
(21) Anmeldenummer: 08759196.2
(22) Anmeldetag: 11.06.2008
(51) Int. Cl.: H04L 12/26, H04L 29/06, H04L 29/08

(54) **VERFAHREN UND VORRICHTUNG ZUR PROTOKOLLIERUNG VON KOMMUNIKATIONSVERBINDUNGEN BEI SEHR HOHEN DATENRATEN**
METHOD AND DEVICE FOR LOGGING COMMUNICATIONS CONNECTIONS AT VERY HIGH DATA RATES
PROCÉDÉ ET DISPOSITIF D'ÉTABLISSEMENT DE PROTOCOLE DE CONNEXIONS DE COMMUNICATION POUR DES TAUX DE TRANSFERT TRÈS ÉLEVÉS

(30) Priorität: 14.08.2007 DE 102007038338
(43) Veröffentlichungstag der Anmeldung: 26.05.2010
(73) Patentinhaber: Rohde & Schwarz GmbH & Co. KG, 81671 München (DE)
(72) Erfinder: GRUBER, Ingo, 80634 München (DE); ROTH, Michael, 85521 Riemerling (DE)
(74) Vertreter: Körfer, Thomas
(86) Internationale Anmeldenummer: PCT/EP2008/004691
(87) Internationale Veröffentlichungsnummer: WO 2009/021573

(56) Entgegenhaltungen:
- EP-A- 1 480 379
- WO-A-2006/071560
- DE-A1- 10 335 811
- US-A1- 2003 033 440
- DERMLA A ET AL: "ANALYSE DER PROTOKOLLE IN LOKALEN NETZEN BIS OSI-EBERE 4" AUTOMATISIERUNGSTECHNISCHE PRAXIS - ATP, OLDENBOURG INDUSTRIEVERLAG, MUNCHEN, DE, Bd. 30, Nr. 3, 1. Januar 1988 (1988-01-01), Seiten 144-146, XP000811730 ISSN: 0178-2320
- RAMÓN CÁCERES ET AL: "Measurement and Analysis of IP Network Usage and Behavior" IEEE COMMUNICATIONS MAGAZINE, IEEE SERVICE CENTER, PISCATAWAY, US, Bd. 38, Nr. 5, 1. Mai 2000 (2000-05-01), Seiten 144-151, XP011091290 ISSN: 0163-6804

## Beschreibung

Die Erfindung betrifft ein Verfahren und eine Vorrichtung zur Protokollierung von Daten mehrerer Protokollhierarchieebenen in Kommunikationsverbindungen bei sehr hohen Datenraten, insbesondere in Kommunikationsverbindungen nach dem Long Term Evolution Standard oder anderer Mobilfunk- und/oder Mobiltelefon-Systeme.

Herkömmlich werden zur Protokollierung von Daten mehrerer Protokollhierarchieebenen in Kommunikationsverbindungen bei sehr hohen Datenraten die gesamten Daten sämtlicher Protokollhierarchieebenen aufgezeichnet. Bei Übertragungsverfahren sehr hoher Datenrate ist die Aufzeichnung eines Vielfaches dieser Datenrate auf Grund der mehreren Protokollhierarchieebenen nur mit großem Aufwand machbar.

So zeigt die DE 103 35 811 A1 eine Nachrichtenanalyseeinrichtung und ein zugehöriges Verfahren, welche es ermöglichen, die übertragenen Daten zwischen mehreren Protokollhierarchieebenen eines Kommunikationssystems zu protokollieren. Dabei wird jedoch Redundanz innerhalb der Daten der unterschiedlichen Ebenen nicht ausgenutzt. Somit werden auch redundante Daten für jede Ebene erneut gespeichert. Auch die Druckschrift "Analyse der Protokolle in lokalen Netzen bis OSI-Ebene 4" von A. Dermla et al., in Automatisierungstechnische Praxis - ATP, Oldenbourg Industrieverlag, München, Deutschland, Bd. 30, Nr. 3, 1.1.1988, Seiten 144 - 146, ISSN 0178-2320, offenbart eine Nachrichtenanalyseeinrichtung und ein entsprechendes Verfahren nach dem Stand der Technik.

Der Erfindung liegt die Aufgabe zu Grunde, ein Verfahren und eine Vorrichtung zur Protokollierung von Daten mehrerer Protokollhierarchieebenen in Kommunikationsverbindungen bei sehr hohen Datenraten zu schaffen, welches bzw. welche auch bei sehr hohen Datenraten der Kommunikationsverbindung zuverlässig arbeitet, und einen geringen Aufwand verursacht.

Die Aufgabe wird erfindungsgemäß für das Verfahren durch die Merkmale des unabhängigen Anspruchs 1 und durch die Merkmale des unabhängigen Anspruchs 10 für die Vorrichtung gelöst. Vorteilhafte Weiterbildungen sind Gegenstand der hierauf rückbezogenen Unteransprüche.

Zur Aufzeichnung von Daten mehrerer Stufen einer Protokollhierarchie in einem Kommunikationssystem werden die Daten von einem Empfänger empfangen und von einem Speicher gespeichert. Die Daten bestehen aus Nutzdaten und Steuer-Informationen. Die Steuer-Informationen sind den einzelnen Protokollhierarchieebenen zugeordnet. Dabei werden die Steuer-Informationen sämtlicher Protokollhierarchieebenen empfangen und gespeichert. Weiterhin wird höchstens eine Kopie der Nutzdaten gespeichert. Gegenüber der erneuten Speicherung der Nutzdaten mit den Steuer-Informationen zu jeder Protokollhierarchieebene ergibt sich so eine deutliche Reduktion der Menge zu speichernder Information.

Vorteilhafterweise werden die Nutzdaten von den Protokollhierarchieebenen umgruppiert. Bevorzugt werden mit den Steuer-Informationen der Protokollhierarchieebenen Verweise auf die Nutzdaten durch den Speicher gespeichert. Durch die Speicherung von Verweisen auf die Nutzdaten sind die gespeicherten Daten uneingeschränkt nutzbar. Auch Umgruppierungen der Nutzdaten zwischen den Protokollhierarchieebenen werden damit kompensiert.

Vorteilhafterweise werden die Steuer-Informationen der einzelnen Protokollhierarchieebenen jeweils genau einmal gespeichert. Dies reduziert die Speicheranforderungen weiter.

Vorteilhafterweise wird genau eine Kopie der Nutzdaten von dem Speicher gespeichert. So sind sämtliche Informationen der Kommunikation rekonstruierbar.

Alternativ wird keine Kopie der Nutzdaten von dem Speicher gespeichert. So kann der Speicherbedarf weiter reduziert werden, wenn die Nutzdaten bekannt sind, bei einer Vielzahl von Anwendungen von einer erfolgreichen Übertragung ausgegangen werden kann, und die übertragenen Nutzdaten damit nicht benötigt werden.

Die Nutzdaten und die Steuer-Informationen werden bevorzugt von dem Speicher in getrennten Dateien gespeichert. Durch die getrennte Speicherung ist der Zugriff auf bestimmte gesuchte Daten erleichtert.

Bevorzugt werden die Nutzdaten und die Steuer-Informationen mit unterschiedlichen Verfahren von dem Empfänger an den Speicher übertragen und von dem Speicher gespeichert. Vorteilhafterweise werden die Steuer-Informationen mit einem redundanten, fehlertoleranten Verfahren von dem Empfänger an den Speicher übertragen und von dem Speicher gespeichert. Die Nutzdaten werden bevorzugt mit einem nicht redundanten, nicht fehlertoleranten Verfahren von dem Empfänger an den Speicher übertragen und von dem Speicher gespeichert. So kann in bestimmten Anwendungen auf die wichtigeren SteuerDaten mit hoher Sicherheit zugegriffen werden, während die Nutzdaten, welche typischerweise über ein hohes Volumen verfügen, jedoch für die spezielle Anwendung weniger essenziell sind und mit geringem Aufwand gespeichert werden.

Nachfolgend wird die Erfindung anhand der Zeichnung, in der ein vorteilhaftes Ausführungsbeispiel der Erfindung dargestellt ist, beispielhaft beschrieben. In der Zeichnung zeigen:
- Fig. 1: einen beispielhaften Aufbau einer Kommunikationsbeziehung zweier Endgeräte;
- Fig. 2: einen beispielhaften Aufbau zum Protokollieren und Analysieren einer Kommunikationsverbindung;
- Fig. 3: den Aufbau einer Protokollhierarchie am Beispiel UMTS;
- Fig. 4: eine schematische Darstellung des Aufbaus der Daten auf verschiedenen Protokollhierarchieebenen;
- Fig. 5: einen ersten beispielhaften Aufbau eines Systems zur Aufzeichnung von Protokollierungs-Daten in einem UMTS Kommunikationssystem;
- Fig. 6: eine schematische Übersicht der gespeicherten Daten in einer beispielhaften erfindungsgemäßen Vorrichtung, und
- Fig. 7: einen zweiten beispielhaften Aufbau eines Systems zur Aufzeichnung von Protokollierungs-Daten in einem UMTS Kommunikationssystem.

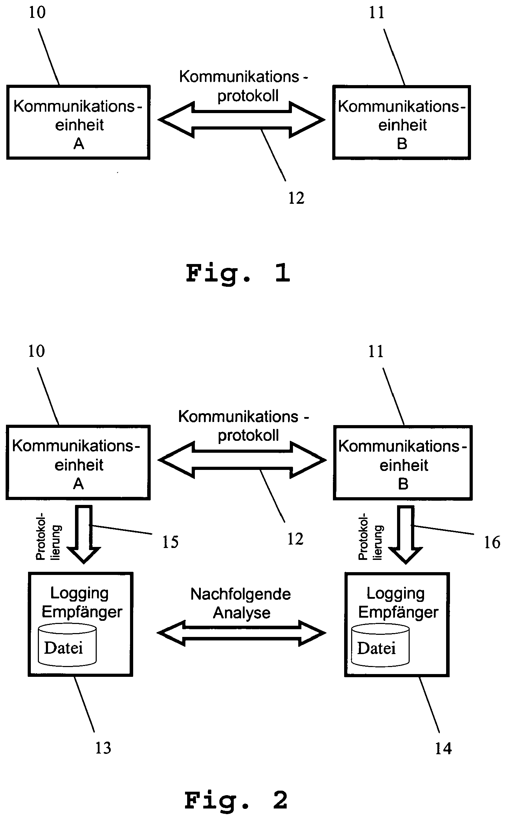

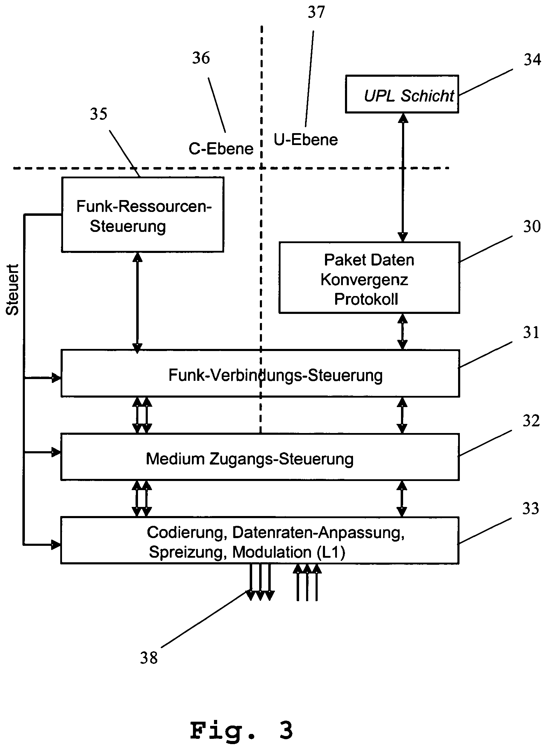

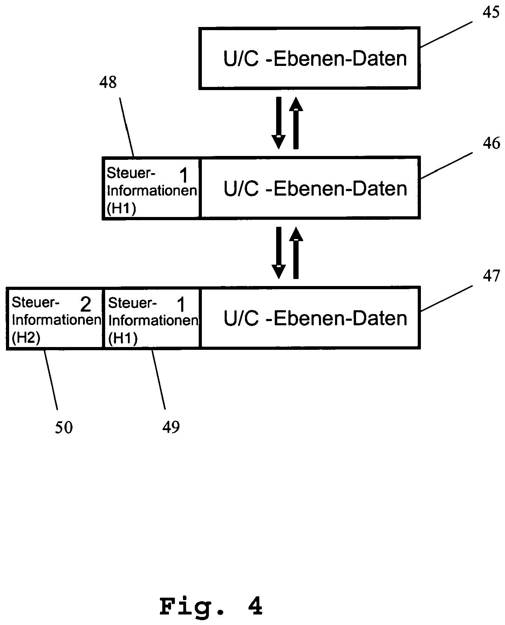

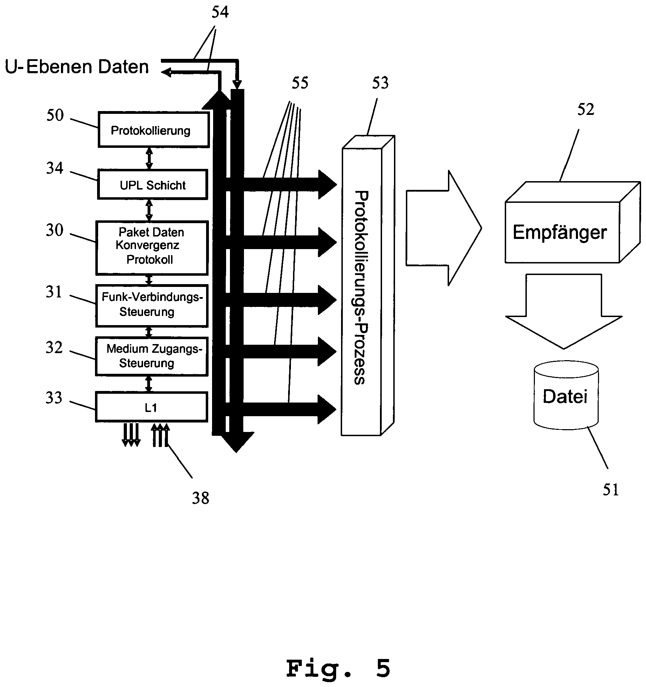

Zunächst wird anhand der Fig. 1 und 2 der generelle Aufbau und die Funktionsweise eines Protokollierungs-Systems für ein Kommunikationssystem gezeigt. Mittels Fig. 3 und 4 wird die Art und Menge der zu speichernden Daten dargestellt. Anhand der Fig. 5 - 7 wird abschließend die Funktionsweise des erfindungsgemäßen Verfahrens und der erfindungsgemäßen Vorrichtung anhand von Ausführungsbeispielen erläutert. Identische Elemente wurden in ähnlichen Abbildungen zum Teil nicht wiederholt dargestellt und beschrieben.

Fig. 1 zeigt einen beispielhaften Aufbau einer Kommunikationsbeziehung zweier Endgeräte 10, 11. Die Endgeräte 10, 11 sind mittels des Kommunikationsprotokolls 12 verbunden. Moderne Kommunikationsprotokolle sind in der Lage, eine Vielzahl von unterschiedlichsten Anwendungsfällen zu unterstützten. Im Allgemeinen werden Kommunikationsprotokolle genutzt, um Daten (z.B. Steuerungs-Informationen) beliebiger Art zwischen zwei Einheiten 10, 11 auszutauschen. Dabei können diese Einheiten 10, 11, jeweils Teil einer größeren Einheit sein. Dies ist z.B. in einem Computer der Fall, bei dem der Prozessor und der Hauptspeicher durch ein Kommunikationsprotokoll sich wechselseitig Daten senden. Es können aber auch vollständig unabhängige Einheiten sein, die mit Hilfe von Kommunikationsprotokollen miteinander kommunizieren. Eines der bekanntesten Kommunikationsprotokolle dieser Kategorie ist z.B. das Internet Protokoll (IP), mit dem Computer über große Distanzen Daten miteinander austauschen können.
Eine weitere Aufteilung in Untergruppen kann gemacht werden, wenn man zwischen drahtgebundenen oder drahtlosen Übertragungswegen unterscheidet. Eine große Menge an Kommunikationsprotokollen sind solche Protokolle, die Daten drahtlos zwischen zwei Endgeräten austauschen können. Einige bekannte Protokolle sind z.B. Wirelss LAN (WLAN), WiMAX, oder Universal Mobile Telecommunications System (UMTS).

Die hohe Komplexität von Kommunikationsprotokollen macht ein ausgiebiges Testen der Implementierungen unumgänglich um etwaige Fehler frühzeitig zu erkennen, bevor die Implementierungen produktiv genutzt werden. Idealerweise werden dazu Referenzdaten zwischen den beiden Kommunikationspartnern ausgetauscht, und deren korrekter Empfang auf beiden Empfangsseiten geprüft. Um mögliche Fehler in der Protokollverarbeitung einfach nachvollziehen zu können, ist es hilfreich, wenn alle ausgetauschten Daten zwischen den Kommunikationseinheiten für eine spätere Analyse gesichert werden. Dieses Mitschreiben der Kommunikation für Testzwecke wird als Protokollierung (engl. Logging) bezeichnet.

In Fig. 2 wird ein beispielhafter Aufbau zum Protokollieren und Analysieren einer Kommunikationsverbindung zwischen zwei Endgeräten 10, 11 dargestellt. Diese sind dabei durch das Kommunikationsprotokoll 12 verbunden. Neben den beiden beteiligten Kommunikationseinheiten 10, 11 sind die Logging-Empfänger 13, 14 dargestellt. Diese zusätzlichen Einheiten, speichern die ankommenden Protokollierungs-Daten 15, 16 dauerhaft für eine spätere Analyse der Ergebnisse. Durch das genau Protokollieren aller zwischen den Kommunikationseinheiten 10, 11 ausgetauschten Daten, enthalten die Protokollierungs-Daten 15, 16 ein exaktes Abbild dieser Kommunikation. Durch das Protokollieren aller ausgetauschter Informationen auf beiden Seiten des Kommunikationsprotokolls 12 kann eine vollständige Rekonstruktion der Kommunikation erreicht werden. Damit ist eine nachfolgende und einfache Analyse der gesamten Kommunikation möglich. Wenn alle ausgetauschten Informationen protokolliert wurden, kann ein fehlerhafter Teil des Informationsaustauschs einfach erkannt und im Anschluss behoben werden. Eine solche Funktionalität ist ganz allgemein für beliebige Tests von Kommunikationsprotokollen wichtig. Es ist aber insbesondere für die Prüfung von umfangreichen Implementierungen, wie z.B. bei Mobilfunkstandards, unumgänglich.

Jedoch nutzen umfangreichere Übertragungsstandards im Grunde genommen nicht mehr ein einzelnes Kommunikationsprotokoll sondern meist eine Vielzahl aufeinander abgestimmter und aufbauender Protokolle. Diese decken dann meist mehr als eine Schicht im ISO/OSI Referenzmodell ab. Ein bekanntes Beispiel ist der Mobilfunkstandard UMTS. Im Falle von UMTS werden die Schichten 1-3 standardisiert. Der Mobilfunkstandard UMTS enthält deswegen ebenfalls mehrere logisch voneinander getrennte Einheiten, die jedoch teilweise aufeinander aufbauen.

Fig. 3 zeigt den Aufbau einer Protokollhierarchie am Beispiel UMTS. Diese umfasst alle für UMTS standardisierten Protokolle und die Gesamtheit aller für UMTS genutzten Protokollverarbeitungseinheiten.
Die Protokollhierarchie, oder auch Protokollstack genannt bei UMTS ist in eine Steuerungs-Ebene (C-Ebene, engl. Control-plane) 36 und eine Nutzer-Ebene (U-Ebene, engl. User-plane) 37 aufgeteilt. Die C-Ebene 36 steuert dabei die Kommunikationsbeziehung, während die U-Ebene 37 die eigentlichen, auszutauschenden Daten empfängt, verarbeitet, und weiterleitet. U-Ebenen-Daten werden in der UPL-Schicht 34 von den höheren Schichten entgegengenommen, C-Ebenen-Daten werden initial in der Funk-Ressourcen-Steuerung (engl. Radio Recource Control) 35 erzeugt. Die U-Ebenen-Daten werden nacheinander von den Protokollhierarchieebenen Paket Daten Konvergenz Protokoll (engl. Packet Data Convergence Protocol) 30, Funk-Verbindungs-Steuerung (engl. Radio Link Control) 31, Medium Zugangs-Steuerung (engl. Medium Access Control) 32 und Codierung, Datenraten-Anpassung, Spreizung und Modulation (Coding, Rate matching, spreading, modulation) 33 verarbeitet. Block 33 gibt die Daten in Form einer Funkübertragung 38 ab. Die Blöcke 31, 32 und 33 werden dabei von der Funk-Ressourcen-Steuerung (engl. Radio Resource Control) 35 gesteuert.

In Fig. 4 wird eine schematische Darstellung des Aufbaus der Daten auf verschiedenen Protokollhierarchieebenen dargestellt. Sowohl Pakete der C-Ebene als auch der U-Ebene werden durch die niedrigeren Schichten zur Versendung an die gegenüberliegende Empfangseinheit weitergeleitet. Für die Verarbeitung auf der Gegenseite der Kommunikationsverbindung fügt jede Protokollhierarchieebene zusätzliche Informationen in Form von Steuer-Informationen 48, 49, 50 zu dem ursprünglich zu verarbeitenden Paket 45, 46, 47 hinzu. Diese Steuer-Informationen 48, 49, 50 ermöglichen der Gegenstelle, das Paket 45, 46, 47 zu identifizieren und entsprechend weiterzuverarbeiten. In der Gegenrichtung werden in jeder Protokollhierarchieebene die von den unteren Schichten empfangenen Daten verarbeitet und nach Entfernung der nicht mehr benötigten Steuer-Informationen 48, 49, 50 für eine Weiterverarbeitung an die darüber liegende Schicht weitergereicht. C-Ebenen-Datenpakete werden in der Funk-Ressourcen-Steuerung 35 abschließend verarbeitet und dann gelöscht, während U-Ebenen-Datenpakete in der UPL-Schicht 34 an die höheren Schichten abgeliefert werden.

Für eine vollständige Rekonstruierbarkeit einer Kommunikationsverbindung ist es deshalb notwendig, dass alle Daten mitgeschrieben werden. Dies bedeutet, dass in jeder Protokollhierarchieebene die gesamten verarbeiteten Kommunikations-Informationen protokolliert werden müssen. Weil die einzelnen Protokolleinheiten teilweise aufeinander aufbauen, verarbeiten sie auch die gleichen ursprünglichen Daten mehrmals. Dadurch entsteht eine mehrfach größere Menge an Protokollierungs-Daten, als insgesamt zwischen den Kommunikationspartnern an Informationen ausgetauscht werden. Dies erfordert eine schnelle Kommunikationsverbindung zum Protokollierungs-Daten-Empfänger, und dieser muss in der Lage sein, die ankommenden großen Datenmengen zu verarbeiten und dauerhaft zu sichern. Dies stellt hohe Anforderungen an die Leistungsfähigkeit des Protokollierungs-Daten-Empfängers.

Fig. 5 zeigt einen ersten beispielhaften Aufbau eines Systems zur Aufzeichnung von Protokollierungs-Daten in einem UMTS Kommunikationssystem. Die U-Ebenen-Daten 54 werden an die Protokollhierarchie übertragen. Die Protokollierungs-Daten 55 sämtlicher Protokollhierarchieebenen 30, 31, 32, 33 und 34 werden an einen Empfänger 52 übertragen und in einer Protokollierungs-Datei 51 gespeichert. In Block 50 findet keine gesonderte Protokollierung der Daten statt. Es wird explizit auf die Darstellung der Protokollierung von C-Ebenen-Daten verzichtet, weil deren Datenrate im Verhältnis zu der U-Ebenen-Datenrate zu vernachlässigen ist (<2%). Es ist offensichtlich, dass die U-Ebenen-Daten in fünf Schichten der Protokollhierarchie verarbeitet und auch protokolliert werden müssen. Dabei entsteht eine um mindestens 500% größere Protokollierungs-Datenrate als die ursprüngliche U-Ebenen-Datenrate. Die wirkliche Protokollierungs-Datenrate wird effektiv etwas größer sein als das Vierfache der U-Ebenen-Datenrate, weil die zusätzlich hinzugefügten Steuer-Informationen in den einzelnen Schichten ebenfalls mitprotokolliert werden müssen. Außerdem müssen alle protokollierten Nachrichten mit einem Zeitstempel versehen werden, um eine zeitliche Einordnung der einzelnen Nachrichten zu ermöglichen. Dadurch erhöht sich der Protokollierungs-Aufwand noch zusätzlich.

Die maximale Übertragungsrate bei UMTS ist 2MBit/s im Downlink und 384kBit/s im Uplink. Downlink bezeichnet dabei die Richtung von der Basisstation zu einem mobilen Endgerät, Uplink die Gegenrichtung. Eine vollständige Protokollierung einer solchen Kommunikationsbeziehung ist mit Hilfe von heute verfügbarer Technik problemlos möglich. Die UMTS-Weiterentwicklungen High Speed Packet Access (HSPA) kann derzeit 14MBit/s im Downlink und 5 MBit/s im Uplink übertragen. Auch bei diesen Datenraten ist noch eine vollständige Protokollierung mit vertretbarem Aufwand und heute verfügbarer Technik möglich, allerdings sind die Anforderungen an die Protokollierungseinrichtung und den Empfänger signifikant.

Der Nachteil der bisher genutzten Technik der Protokollierung ist deshalb ganz offensichtlich, dass es nur sehr schlecht mit steigenden U-Ebenen-Datenraten skaliert. Jedoch war aufgrund der geringen verarbeiteten Datenraten die Notwendigkeit einer Optimierung des Protokollierungs-Prozesses bisher nicht vorhanden. Dies ändert sich jedoch mit der Weiterentwicklung des UMTS-Mobilfunkstandards. HSPA soll bis zu 50MBit/s im Downlink übertragen können, während Long Term Evolution (LTE) bis zu 100MBit/s im Downlink und 50Mbit/s im Uplink versenden können soll. Durch die anvisierten sehr hohen Datenraten, speziell bei LTE, entstehen kontinuierlich sehr große Datenmengen für die Protokollierung. Wenn weiterhin die Abschätzung einer vierfach höheren Protokollierungs-Datenrate angenommen wird, dann ergeben sich Datenmengen von 50MByte an Protokollierungs-Daten für jede aufgezeichnete Sekunde Protokoll. Sowohl das Verarbeiten als auch das dauerhafte Speichern auf einer Festplatte für eine vollständige Protokollierung ist dabei technisch nicht mehr oder nur noch mit größtem Aufwand möglich.

Durch ein erfindungsgemäßes effektives Logging der Mobilfunk-Kommunikationsverbindung ist es mit deutlich reduziertem Aufwand bei der Verarbeitung der Protokollierungs-Daten weiterhin möglich alle relevanten Daten zu protokollieren. Der Vorteil bei der Erfindung ist, dass keine Daten verworfen werden müssen, sondern nur das Verarbeiten von redundanten Protokollierungs-Informationen vermieden wird. Dies bedeutet, der Erfindungsansatz arbeitet ohne Verlust von Protokollierungs-Informationen, und alle Details einer Kommunikation bleiben weiterhin erhalten und können bei einer späteren Analyse rekonstruiert werden. Zusätzlich verringert sich durch eine redundanzfreie Speicherung der Protokollierungs-Daten der dafür benötigte Speicherplatz auf einem nicht-flüchtigen Medium erheblich. Durch diese Optimierung wird eine vollständige Protokollierung einer hochdatenratigen Mobilfunkverbindung überhaupt erst wieder möglich.

Die Analyse der Protokollierungs-Daten hat gezeigt, dass ein großer Teil der protokollierten Daten durch das Verarbeiten von U-Ebenen-Daten entsteht, weil die unterschiedlichen Protokollhierarchieebenen aufeinander aufbauen. Die zusätzlich an die U-Ebenen-Daten angehängten Steuer-Informationen sowie die C-Ebenen-Daten machen einen nur sehr geringen Prozentsatz der anfallenden Protokollierungs-Datenrate aus. Wenn deshalb die U-Ebenen-Daten nur einmal gespeichert werden, und dann an anderer Stelle jeweils auf diese Protokollierung verwiesen wird, kann der Aufwand für die Verarbeitung deutlich reduziert werden. Dazu sind keine zusätzlichen Berechnungen (wie z.B. bei einer Komprimierung der Daten) notwendig, sondern nur eine Referenzierung auf die bereits gespeicherten Daten. Die verbleibenden Steuer-Informationen können aufgrund ihrer geringen Anzahl und Größe im Vergleich zu U-Ebenen-Datenpaketen mit sehr geringem Verarbeitungs- und Speicheraufwand protokolliert werden. Bei der bisherigen Protokollierung der Mobilfunkverbindung entstehen mindestens fünf mal so viele Protokollierungs-Daten wie ursprünglich Informationen zwischen beiden Kommunikationspartnern ausgetauscht werden. Im Gegensatz dazu entstehen bei einer redundanzfreie Speicherung der Protokollierungs-Informationen jedoch nur wenig mehr Protokollierungs-Daten, als ursprünglich Daten ausgetauscht wurden.

Die drahtlose Verbindungsstrecke zwischen einer Mobilfunkstation und einem Endgerät hat eine durch den Übertragungskanal vorgegebene theoretische Übertragungsbandbreite. Diese kann ohne Änderung von physikalischen Eigenschaften nicht verändert werden. Technische Maßnahmen ermöglichen die zur Verfügung stehende theoretische Bandbreite möglichst optimal auszunutzen. Eine Optimierungsgröße ist dabei die Menge an Nutzdaten (U-Ebenen-Daten) zu maximieren, die zwischen einer Mobilfunkstation und einem Endgerät pro Zeiteinheit ausgetauscht werden können. Für eine möglichst hohe Effizienz der drahtlosen Übertragung muss deshalb der Anteil an Steuer-Informationen an der gesamten Datenübertragung so gering wie möglich ausfallen. Steuerinformationen sind dabei sowohl Informationen welche die Kommunikationsverbindung zwischen Mobilfunkstation und Endgerät aufbauen, aufrechterhalten und wieder abbauen (C-Ebenen-Daten), als auch Steuer-Informationen die an Nutzdaten angehängt werden, um diese beim Empfänger weiterverarbeiten zu können.

Zur Reduktion des Anteils an Steuer-Informationen wird deshalb bei der Standardisierung eines Mobilfunkstandards ganz allgemein darauf geachtet, dass die Menge an C-Ebenen-Daten, als auch die Größe der Steuer-Informationen, welche an die Nutzdaten angehängt werden, minimiert wird. Dies führt dazu, dass U-Ebenen-Daten im allgemeinen den weitaus größten Teil einer Datenkommunikation ausmachen. Außerdem bauen die einzelnen Protokollhierarchieebenen des UMTS-Mobilfunkstandards stark aufeinander auf. Datenpakete von oberen Ebenen werden in darunter liegenden Ebenen neu angeordnet und/oder erhalten neue Steuer-Informationen, werden aber ansonsten nicht verändert.

Beide Eigenschaften können im Rahmen dieser Erfindung genutzt werden, um die Menge an Protokollierungs-Daten massiv zu reduzieren. Weil die Protokollhierarchieebenen stark aufeinander aufbauen, werden die ursprünglichen Nutzdaten (U-Ebenen-Daten) nur in der obersten Ebene (in diesem Fall die Protokollierungs-Ebene 50) extrahiert, protokolliert und gesondert gespeichert. Dies kann in Senderichtung beim Empfang der Daten aus den oberen Ebenen oder von einem anderen PC erfolgen sowie in Empfangsrichtung kurz vor der Weiterleitung an die oberen Schichten oder einen anderen PC. Dadurch ist der Aufwand zur Protokollierungs-Verarbeitung der Nutzdaten minimal.

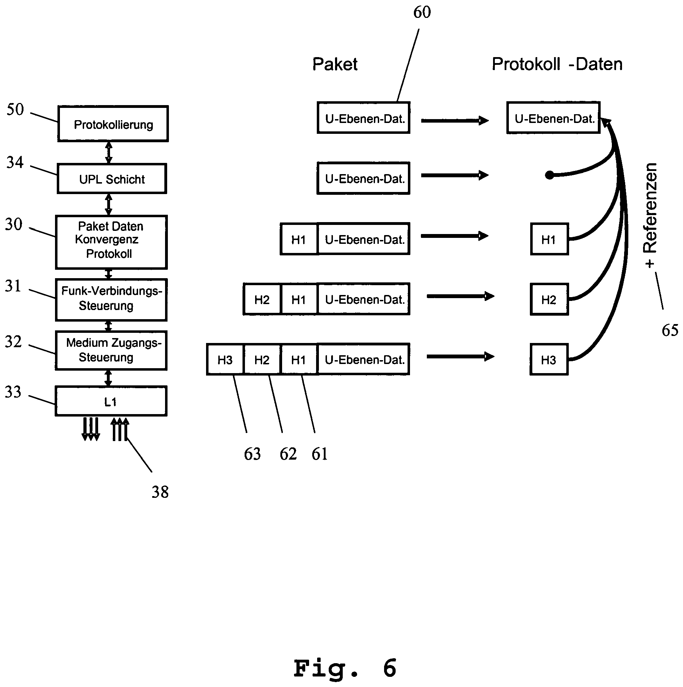

In darunter liegenden Ebenen wird auf die vollständige Protokollierung der gesamten empfangenen oder zu übertragenden Daten verzichtet. Wie beschrieben stellen nur die Steuer-Informationen innerhalb der Nutzdatenpakete neue Informationen dar. Deshalb ist es ausreichend, wenn nur diese neu entstehenden Informationen in den einzelnen Ebenen protokolliert werden. Auf ein erneutes Protokollieren von bereits protokollierten Nutzdaten kann verzichtet werden. Für eine vollständige Rekonstruktion der ursprünglichen Datenpakete ist eine Referenzierung auf die bereits protokollierten Daten ausreichend. Dadurch kann die Datenmenge, die für eine Protokollierung der gesamten Kommunikationsbeziehung notwenig ist, signifikant reduziert werden. Dieser Zusammenhang zwischen den Ebenen der Protokollhierarchie, den Paketdaten und den Logging-Daten wird in Fig. 6 dargestellt. Lediglich die Steuer-Informationen 61, 62 und 63 und Referenzen 65 auf die Nutzdaten 60 werden zusätzlich zu den Nutzdaten 60 gespeichert.

Weil jeder Mobilfunkstandard (und damit insbesondere auch LTE) versucht, die Steuer-Informationen am Gesamtdatenaufkommen zu minimieren, sind deren Anteile auch beim Protokollieren sehr gering. Der Erfindungsansatz, nur die nicht-redundanten Informationen zu protokollieren, ermöglicht deshalb eine deutliche Reduzierung der generierten Protokollierungs-Datenrate. Durch die Referenzierung der Nutzdatenpakete wird dabei die durchschnittliche Größe eines Protokollierungs-Paketes verkleinert, ohne dadurch eine Verringerung der Gesamtanzahl an zu protokollierenden Paketen zu bewirken. Damit ist es wieder möglich, Standard-Technik zu nutzen, um eine vollständig rekonstruierbare Kommunikation zwischen Basisstation und Endgerät zu verarbeiten und dauerhaft zu speichern.

Die reinen Nutzdaten, wie sie von den darüber liegenden Schichten empfangen oder weitergeleitet werden, und die Steuer-Informationen lassen sich sehr leicht separieren. Dadurch können die Protokollierungs-Informationen auch in zwei unterschiedlichen Dateien gespeichert werden. Aufgrund der unterschiedlichen Relevanz von Nutzdaten und Steuer-Informationen können diese auch mit unterschiedlichen Verfahren an den Empfänger übertragen werden. Weil die Steuer-Informationen eine größere Relevanz für die Analyse der Kommunikationsbeziehung haben, können diese mit Hilfe eines fehlergesicherten Protokolls an den Empfänger übertragen werden, und damit verlässlich und vollständig protokolliert werden. Wegen der geringeren Relevanz der Nutzdaten für eine Fehleranalyse des Kommunikationsprotokolls kann bei deren Protokollierung ein nicht fehlergesichertes Protokoll eingesetzt werden. Dadurch können einzelne Informationen dieser Protokollierungs-Daten verloren gehen, jedoch kann auch der Aufwand bei der Protokollierung weiter verkleinert werden.

Wie gezeigt, erzeugen die protokollierten Nutzdaten eine größere Datenmenge bei der Protokollierung als die Steuer-Informationen. Aufgrund dieser deutlich unterschiedlichen Datenmengen können die Nutzdaten auch vorzeitig wieder gelöscht werden und nur die Protokoll-Datei mit den Steuer-Informationen längerfristig gespeichert werden, wodurch der Speicherverbrauch weiter sinkt. Wie bereits angedeutet, können bei einer späteren Analyse die kompletten Protokollierungs-Daten aus den protokollierten Nutzdaten und Steuer-Informationen rekonstruiert werden. Dazu werden die in den Protokollierungs-Daten referenzierten Nutzdaten gemeinsam mit den Steuer-Informationen dargestellt. Damit erscheint die Darstellung so, als ob alle Daten in allen Protokollhierarchieebenen protokolliert wurden.

Für eine spätere Analyse der Kommunikationsbeziehung zwischen Sender und Empfänger muss eine chronologische Sortierung der einzelnen Protokollierungs-Daten möglich sein. Diese Sortierung wird auch mit obiger Erfindung nicht eingeschränkt, weil die Gesamtanzahl an protokollierten Paketen durch die Erfindung nicht reduziert wird, sondern nur deren individuelle Größe. Dadurch kann jedem in der Protokollhierarchie verarbeiteten Paket beim Protokollieren sein individueller Zeitstempel zugewiesen werden, wodurch eine spätere chronologische Sortierung möglich ist.

In Abhängigkeit des Mobilfunkstandards und der Eigenschaften des Mobilfunkkanals können Nutzdatenpakete in den unteren Ebenen der Protokollhierarchie (z.B. Funk-Verbindungs-Steuerung 31 oder Medium Zugangs-Steuerung 32) segmentiert oder konkateniert (aneinandergefügt) werden. Beim Segmentieren wird ein einzelnes Nutzdatenpaket auf mehrere, kleinere Pakete verteilt. Beim Konkatenieren geschieht das Gegenteil, nämlich mehrere Nutzdatenpakete werden zu einem größeren Paket zusammengefasst. Dieser Vorgang muss beim Protokollieren ebenfalls erfasst werden. Auch hier kann durch die beschriebene Nutzung von Referenzen eine effiziente Protokollierung der Vorgänge erfolgen, weil nicht jeweils die gesamten Datenpakete gespeichert werden müssen.

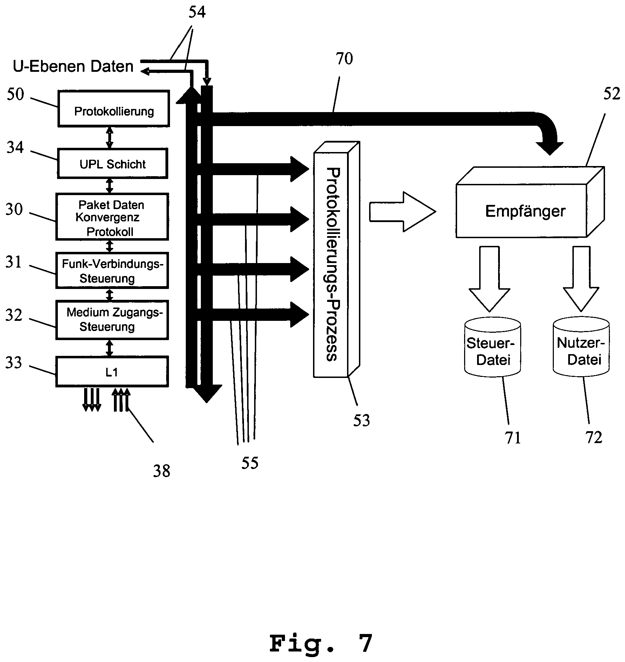

Fig. 7 stellt den gesamten Prozess für eine optimierte Verarbeitung der anfallenden Protokollierungs-Daten dar. Dabei wird auch die Möglichkeit die unterschiedlichen Protokollierungs-Daten in unterschiedliche Dateien zu speichern hervorgehoben. Die Nutzdaten werden in der speziellen Protokollhierarchieebene Protokollierung 50, welche der UPL Schicht 34 vorgelagert ist, vor der Hinzufügung von Steuer-Informationen aufgezeichnet, und an den Empfänger 52 geleitet. Die Protokollierungs-Daten der weiteren Protokollhierarchieebenen werden durch den Protokollierungs-Prozess 53 verarbeitet. Dabei werden die Referenzierungen der Nutzdaten erzeugt und Zeitstempel eingefügt. Die Daten werden an den Empfänger 52 gesendet. Dieser speichert die Nutzdaten in der Nutzer-Datei 72 und die Steuer-Informationen in der Steuer-Datei 71 ab.

Die Erfindung ist nicht auf das dargestellte Ausführungsbeispiel beschränkt. Wie bereits erwähnt, können die Verbindungen verschiedener Kommunikationsstandards protokolliert werden. Ebenso ist eine Anwendung für Protokolle mit unterschiedlicher Anzahl an Protokollhierarchiestufen denkbar. Alle vorstehend beschriebenen Merkmale oder in den Figuren gezeigten Merkmale sind im Rahmen der Erfindung beliebig miteinander kombinierbar.

## Patentansprüche

1. Verfahren zur Protokollierung von Datenpaketen mehrerer Stufen einer Protokollhierarchie in einem Kommunikationssystem für Mobilfunk und/oder Mobiltelefone, wobei die Datenpakete aus Nutzdaten (60) und Steuer-Informationen (61, 62, 63) bestehen,
wobei die Steuer-Informationen (61, 62, 63) den einzelnen Protokollhierarchieebenen zugeordnet sind,
wobei die Steuer-Informationen (61, 62, 63) sämtlicher Protokollhierarchieebenen getrennt nach Protokollhierarchieebene gespeichert werden,
wobei höchstens eine Kopie der Nutzdaten (60) gespeichert wird, und
wobei für jedes Datenpaket nur neu zwischen den einzelnen Protokollhierarchieebenen des Datenpakets entstehende Informationen gespeichert werden.

2. Verfahren nach Anspruch 1,
**dadurch gekennzeichnet,**
**dass** die Steuer-Informationen (61, 62, 63) der einzelnen Protokollhierarchieebenen jeweils genau einmal gespeichert werden.

3. Verfahren nach Anspruch 1 oder 2,
**dadurch gekennzeichnet,**
**dass** die Steuer-Informationen (61, 62, 63) mit einem fehlertoleranten Verfahren an einen Speicher (71, 72) übertragen und gespeichert werden.

4. Verfahren nach einem der Ansprüche 1 bis 3,
**dadurch gekennzeichnet,**
**dass** die Nutzdaten (60) mit einem nicht fehlertoleranten Verfahren an einen Speicher (71, 72) übertragen und gespeichert werden.

5. Verfahren nach einem der Ansprüche 1 bis 4,
**dadurch gekennzeichnet,**
**dass** die Nutzdaten (60) und die Steuer-Informationen (61, 62, 63) in getrennten Dateien gespeichert werden.

6. Verfahren nach einem der Ansprüche 1 bis 5,
**dadurch gekennzeichnet,**
**dass** mit den Steuer-Informationen (61, 62, 63) der einzelnen Protokollhierarchieebenen Verweise (65) auf die Nutzdaten (60) und/oder Verweise (65) auf die Steuer-Informationen (61, 62, 63) anderer Protokollhierarchieebenen gespeichert werden.

7. Verfahren nach einem der Ansprüche 1 bis 6,
**dadurch gekennzeichnet,**
**dass** genau eine Kopie der Nutzdaten (60) gespeichert wird.

8. Verfahren nach einem der Ansprüche 1 bis 3,
**dadurch gekennzeichnet,**
**dass** keine Kopie der Nutzdaten (60) gespeichert wird.

9. Vorrichtung zur Aufzeichnung von Datenpaketen mehrerer Stufen einer Protokollhierarchie in einem Kommunikationssystem für Mobilfunk und/oder Mobiltelefone, mit einem Empfänger (52) und einem Speicher (71, 72), wobei die Datenpakete aus Nutzdaten (60) und Steuer-Informationen (61, 62, 63) bestehen,
wobei die Steuer-Informationen (61, 62, 63) den einzelnen Protokollhierarchieebenen zugeordnet sind,
wobei der Empfänger (52) die Steuer-Informationen (61, 62, 63) sämtlicher Protokollhierarchieebenen empfängt und der Speicher (71, 72) diese getrennt nach Protokollhierarchieebene speichert,
wobei der Empfänger (52) höchstens eine Kopie der Nutzdaten (60) in dem Speicher (71, 72) speichert, und wobei die Vorrichtung derart ausgestaltet ist, dass sie für jedes Datenpaket nur neu zwischen den einzelnen Protokollhierarchieebenen des Datenpakets entstehende Informationen speichert.

10. Vorrichtung nach Anspruch 9,
**dadurch gekennzeichnet,**
**dass** der Speicher (71, 72) die Steuer-Informationen (61, 62, 63) der einzelnen Protokollhierarchieebenen jeweils genau einmal speichert.

11. Vorrichtung nach Anspruch 9 oder 10,
**dadurch gekennzeichnet,**
**dass** der Empfänger (52) die Steuer-Informationen (61, 62, 63) mit einem redundanten, fehlertoleranten Verfahren an den Speicher (71, 72) überträgt.

12. Vorrichtung nach einem der Ansprüche 9 bis 11,
**dadurch gekennzeichnet,**
**dass** der Empfänger (52) die Nutzdaten (60) mit einem nicht redundanten, nicht fehlertoleranten Verfahren an den Speicher (71, 72) überträgt.

13. Vorrichtung nach einem der Ansprüche 9 bis 12,
**dadurch gekennzeichnet,**
**dass** der Speicher (71, 72) die Nutzdaten (60) und die Steuer-Informationen (61, 62, 63) in getrennten Dateien speichert.

14. Vorrichtung nach einem der Ansprüche 9 bis 13,
**dadurch gekennzeichnet,**
**dass** mit den Steuer-Informationen (61, 62, 63) der einzelnen Protokollhierarchieebenen Verweise (65) auf die Nutzdaten (60) und/oder Verweise (65) auf die Steuer-Informationen (61, 62, 63) anderer Protokollhierarchieebenen in dem Speicher (71, 72) gespeichert sind.

15. Vorrichtung nach einem der Ansprüche 9 bis 14,
**dadurch gekennzeichnet,**
**dass** genau eine Kopie der Nutzdaten (60) in dem Speicher (71, 72) gespeichert ist.

16. Vorrichtung nach einem der Ansprüche 9 bis 11,
**dadurch gekennzeichnet,**
**dass** keine Kopie der Nutzdaten (60) von dem Speicher (71, 72) gespeichert ist.

## Claims

1. Method for logging of packets of data of a plurality of steps of a protocol hierarchy in a communications system for mobile radio and/or mobile telephones, wherein the packets of data consist of useful data (60) and control information (61, 62, 63),
wherein the control information (61, 62, 63) is assigned to the individual protocol hierarchy planes,
wherein the control information (61, 62, 63) of all the protocol hierarchy planes is stored separated according to protocol hierarchy plane,
wherein at most one copy of the useful data (60) is stored, and
wherein for each packet of data only new information arising between the individual protocol hierarchy planes of the packet of data is stored.

2. Method according to claim 1,
**characterised in that** the control information (61, 62, 63) of the individual protocol hierarchy planes is stored exactly once in each case.

3. Method according to claim 1 or 2,
**characterised in that** the control information (61, 62, 63) is transferred to a memory (71, 72) and stored with an error-tolerant method.

4. Method according to one of claims 1 to 3,
**characterised in that** the useful data (60) is transferred to a memory (71, 72) and stored with a method which is non-error tolerant.

5. Method according to one of claims 1 to 4,
**characterised in that** the useful data (60) and the control information (61, 62, 63) are stored in separate files.

6. Method according to one of claims 1 to 5,
**characterised in that** references (65) to the useful data (60) and/or references (65) to the control information (61, 62, 63) of other protocol hierarchy planes are stored with the control information (61, 62, 63) of the individual protocol hierarchy planes.

7. Method according to one of claims 1 to 6,
**characterised in that** exactly one copy of the useful data (60) is stored.

8. Method according to one of claims 1 to 3,
**characterised in that** no copy of the useful data (600 is stored.

9. Device for logging of packets of data of a plurality of steps of a protocol hierarchy in a communications system for mobile radio and/or mobile telephones, with a receiver (52) and a memory (71, 72),
wherein the packets of data consist of useful data (60) and control information (61, 62,63),
wherein the control information (61, 62, 63) is assigned to the individual protocol hierarchy planes,
wherein the receiver (52) receives the control information (61, 62, 63) of all the protocol hierarchy planes and the memory (71, 72) stores these separated according to protocol hierarchy plane,
wherein the receiver (52) stores at most one copy of the useful data (60) in the memory (71, 72), and
wherein the device is embodied in such a way that for each packet of data it only stores new information arising between the individual protocol hierarchy planes of the packet of data.

10. Device according to claim 9,
**characterised in that** the memory (71, 72) stores the control information (61, 62, 63) of the individual protocol hierarchy planes exactly once in each case.

11. Device according to claim 9 or 10,
**characterised in that** the receiver (52) transfers the control information (61, 62, 63) to the memory (71, 72) with a redundant error-tolerant method.

12. Device according to one of claims 9 to 11,
**characterised in that** the receiver (52) transfers the useful data (60) to the memory (71, 72) with a method which is non-redundant and non-error tolerant.

13. Device according to one of claims 9 to 12,
**characterised in that** the memory (71, 72) stores the useful data (60) and the control information (61, 62, 63) in separate files.

14. Device according to one of claims 9 to 13,
**characterised in that** references (65) to the useful data (60) and/or references (65) to the control information (61, 62, 63) of other protocol hierarchy planes are stored in the memory (71, 72) with the control information (61, 62, 63) of the individual protocol hierarchy planes.

15. Device according to one of claims 9 to 14,
**characterised in that** exactly one copy of the useful data (60) is stored in the memory (71,72).

16. Device according to one of claims 9 to 11,
**characterised in that** no copy of the useful data (60) is stored by the memory (71, 72).

## Revendications

1. Procédé d'établissement de protocole de paquets de données de plusieurs niveaux d'une hiérarchie de protocole dans un système de communication pour la radiotéléphonie mobile ou les téléphones mobiles,
les paquets de données étant constitués de données utilisateur (60) et d'informations de commande (61, 62, 63),
les informations de commande (61, 62, 63) étant attribuées aux différents plans de hiérarchie de protocole,
les informations de commande (61, 62, 63) de tous les plans de hiérarchie de protocole étant mises en mémoire séparément en fonction du plan de hiérarchie de protocole,
au maximum une copie des données utilisateur (60) étant mise en mémoire, et
seules les informations apparaissant nouvellement entre les différents plans de hiérarchie de protocole du paquet de données étant mises en mémoire pour chaque paquet de données.

2. Procédé selon la revendication 1,
**caractérisé en ce que**
les informations de commande (61, 62, 63) des différents plans de hiérarchie de protocole sont dans chaque cas mises en mémoire une seule fois.

3. Procédé selon la revendication 1 ou 2,
**caractérisé en ce que**
les informations de commande (61, 62, 63) sont transmises à une mémoire (71, 72) et mises en mémoire au moyen d'un procédé tolérant aux erreurs.

4. Procédé selon l'une quelconque des revendications 1 à 3, **caractérisé en ce que**
les données utilisateur (60) sont transmises à une mémoire (71, 72) et mises en mémoire au moyen d'un procédé non tolérant aux erreurs.

5. Procédé selon l'une quelconque des revendications 1 à 4,
**caractérisé en ce que**
les données utilisateur (60) et les informations de commande (61, 62, 63) sont mises en mémoire dans des fichiers séparés.

6. Procédé selon l'une quelconque des revendications 1 à 5,
**caractérisé en ce que**
des renvois (65) aux données utilisateur (60) et/ou des renvois (65) aux informations de commande (61, 62, 63) d'autres plans de hiérarchie de protocole sont mis en mémoire avec les informations de commande (61, 62, 63) des différents plans de hiérarchie de protocole.

7. Procédé selon l'une quelconque des revendications 1 à 6,
**caractérisé en ce que**
une seule copie des données utilisateur (60) est mise en mémoire.

8. Procédé selon l'une quelconque des revendications 1 à 3,
**caractérisé en ce que**
aucune copie des données utilisateur (60) n'est mise en mémoire.

9. Dispositif d'enregistrement de paquets de données de plusieurs niveaux d'une hiérarchie de protocole dans un système de communication pour la radiotéléphonie mobile ou les téléphones mobiles, comprenant un récepteur (52) et une mémoire (71, 72),
les paquets de données étant constitués de données utilisateur (60) et d'informations de commande (61, 62, 63),
les informations de commande (61, 62, 63) étant attribuées aux différents plans de hiérarchie de protocole,
le récepteur (52) recevant les informations de commande (61, 62, 63) de tous les plans de hiérarchie de protocole et la mémoire (71, 72) les mettant en mémoire séparément en fonction du plan de hiérarchie de protocole,
le récepteur (52) mettant en mémoire au maximum une copie des données utilisateur (60) dans la mémoire (71, 72), et
le dispositif étant conçu de telle sorte qu'il ne met en mémoire, pour chaque paquet de données, que les informations apparaissant nouvellement entre les différents plans de hiérarchie de protocole du paquet de données.

10. Dispositif selon la revendication 9,
**caractérisé en ce que**
la mémoire (71, 72) met en mémoire dans chaque cas une seule fois les informations de commande (61, 62, 63) des différents plans de hiérarchie de protocole.

11. Dispositif selon la revendication 9 ou 10,
**caractérisé en ce que**
le récepteur (52) transmet les informations de commande (61, 62, 63) à la mémoire (71, 72) au moyen d'un procédé redondant et tolérant aux erreurs.

12. Dispositif selon l'une quelconque des revendications 9 à 11,
**caractérisé en ce que**
le récepteur (52) transmet les données utilisateur (60) à la mémoire (71, 72) au moyen d'un procédé non redondant et non tolérant aux erreurs.

13. Dispositif selon l'une quelconque des revendications 9 à 12,
**caractérisé en ce que**
la mémoire (71, 72) met en mémoire les données utilisateur (60) et les informations de commande (61, 62, 63) dans des fichiers séparés.

14. Dispositif selon l'une quelconque des revendications 9 à 13,
**caractérisé en ce que**
des renvois (65) aux données utilisateur (60) et/ou des renvois (65) aux informations de commande (61, 62, 63) d'autres plans de hiérarchie de protocole sont mis en mémoire avec les informations de commande (61, 62, 63) des différents plans de hiérarchie de protocole dans la mémoire (71, 72).

15. Dispositif selon l'une quelconque des revendications 9 à 14,
**caractérisé en ce que**
une seule copie des données utilisateur (60) est mise en mémoire dans la mémoire (71, 72).

16. Dispositif selon l'une quelconque des revendications 9 à 11,
**caractérisé en ce que**
aucune copie des données utilisateur (60) n'est mise en mémoire par la mémoire (71, 72).
